# EUROPÄISCHE PATENTANMELDUNG

(11) **EP 0 707 246 A1**
(43) Veröffentlichungstag der Anmeldung: **17.04.1996**
(21) Anmeldenummer: 95116126.4
(22) Anmeldetag: 12.10.1995
(51) Int. Cl.: G04G 1/00, G04B 47/06

(54) **Uhr, insbesondere Armbanduhr, mit Kalkulator**

(30) Priorität: 12.10.1994 DE 9416434 U
(71) Anmelder: Imle, Walter Dr., D-80333 München (DE)
(72) Erfinder: Imle, Walter Dr., D-80333 München (DE)
(74) Vertreter: Kern, Ralf M., Dipl.-Ing.

(57) **Zusammenfassung**

Die Erfindung betrifft eine Uhr, insbesondere Armbanduhr mit einem Kalkulator. Ein solcher Kalkulator kann ein Kalorienkalkulator oder ein Blutalkoholkonzentrationskalkulator sein. Die vom Kalkulator berechneten Kalorienwerte bzw. Blutalkoholkonzentrationen werden durch eine Farbanzeige angezeigt, die auf einem Teil der Armbanduhr angeordnet ist. Dabei sind beispielsweise drei Farben vorgesehen, welche bei charakteristischen Kalorienwerten bzw. Blutalkoholkonzentrationen wechseln.

## Beschreibung

Die Erfindung betrifft eine Uhr, insbesondere Armbanduhr, mit Kalkulator, bei der die Uhr außer der Zeitanzeige eine Wiedereingabeeinrichtung für vom Kalkulator berechnete Werte zugeordnet ist.

Solche Uhren sind in Form von Uhren mit Kalorienkalkulatoren bzw. Blutalkoholkonzentrationskalkulatoren bereits bekannt. Zielsetzung beim Kalorienkalkulator ist es, auf einfachste Art und Weise dem Einzelnen ein Mittel an die Hand zu geben, welches ihm auf Dauer ermöglicht, seinen Energieverbrauch am Tag zu kontrollieren und zu beeinflussen. Dies kann vor dem Hintergrund einer starken und zunehmenden Entwicklung im Bereich der Freizeitgestaltung und sportlichen Aktivität gesehen werden. Es wird bewußt auf die motivierende Funktion der Kalkulatoren abgestellt. Sie ermöglichen es dem Einzelnen, die Kontrolle über seine Lebensführung zu erhalten. Der Kalorienkalkulator kann auch ein gutes Medium sein, die Vielzahl der kursierenden Diäten zu begleichen und hier eine Kontrollfunktion zu übernehmen. Darüber hinaus sind auch der annähernd unmerkliche Konsum in Form von Kaffee, Bier, Wein, etc. in der Möglichkeit der Kontrolle und sensibilisieren für diese im Verborgenen blühenden "Dickmacher".

Bei den meisten der Nahrungsmittel heute, die mit Energiewerten bezeichnet sind, kann man die Kenntnis des breiten Publikums zu diesem Thema als sehr fundiert bezeichnen und nachdem dies auch von den Medien auf Dauer unterstützt wird, kann hier eine Hilfe auf einfachste Art und Weise an die Hand gegeben werden.

Beim Blutalkoholkonzentrationskalkulator ist besonders auf die Autofahrer abgestellt. Durch Kalkulation der Blutalkoholkonzentration kann ermittelt werden, ob ein Fahrer, der vorher alkoholische Getränke zu sich genommen hat, noch fahrtüchtig ist. Die Blutalkoholkonzentration kann aber auch unter Gesichtspunkten einer maximalen Blutalkoholkonzentration durchgeführt werden, die für die Gesundheit noch nicht schädlich ist.

Beispielsweise ist aus der DE-OS 29 01 174 ein Kalorienkalkulator bekannt, der unter Anwendung eines elektronischen in einem Gehäuse angeordneten Speicher- und Rechenwerkes mit Bedienungs- und Anzeigeeinrichtungen zur Bestimmung der bei der Nahrungsaufnahme den Nahrungsmitteln zuzuordnenden Kalorienwerten arbeitet, bei dem durch ein programmierbares Speicherwerk und mittels an dem Gehäuse angeordnete Tasten betätigbares Rechenwerk, eine Kaloriensollmengeneinstelleinrichtung und eine an dem Gehäuse ausgebildete Kalorienistmengenanzeigeeinrichtung vorhanden ist.

Besonders vorteilhaft ist es, den Kalorienkalkulator mit einer Uhr, insbesondere einer Armbanduhr zu verbinden. Aus dem deutschen Gebrauchsmuster 93 06 464.0 ist bereits eine Uhr bekannt, in die ein Kalorienkalkulator integriert ist. Es handelt sich um eine Uhr, insbesondere Armbanduhr, mit einem Uhrengehäuse, dem mindestens eine Anzeige, insbesondere ein Zifferblatt zugeordnet ist, bei der der Anzeige oder dem Zifferblatt eine Wiedergabeeinrichtung für Energiewerte zugeordnet ist. Bei dieser bekannten Uhr mit Kalorienkalkulator werden die Energiezufuhr und der Energieverbrauch durch Drehen von ein bis zwei um das Ziffernblatt herum angebrachten Ringen eingegeben und angezeigt. Alternativ dazu wird der Energieverbrauch durch Starten und Stoppen eines umlaufenden Zeigers berechnet. Das Ablesen der bekannten Uhr mit Kalorienkalkulator erfordert jedoch relativ genaues Hinschauen. Die Anzeige ist für ein überschlägiges Orientieren auf einen Blick ungeeignet.

Weiterhin ist in der DE 33 47 758 A1 ein Blutalkoholkonzentrationsrechner in Form einer Armbanduhr offenbart. Die Anzeige erfolgt hier digital, so daß ebenfalls eine schnelle Orientierung nicht möglich ist.

Aufgabe der Erfindung ist es daher, eine Uhr mit Kalkulator bereitzustellen, bei der eine überschlagsmäßige Erfassung der vom Kalkulator berechneten Werte leicht möglich ist. Diese Aufgabe wird bei einer gattungsgemäßen Uhr, insbesondere Armbanduhr mit Kalkulator, dadurch gelöst, daß die weitere Anzeige, die die vom Kalkulator berechneten Werte anzeigt mittels einer Färbung eines Teils der Uhr erfolgt.

Bevorzugte Ausgestaltungen der Erfindung sind in den Unteransprüchen dargestellt.

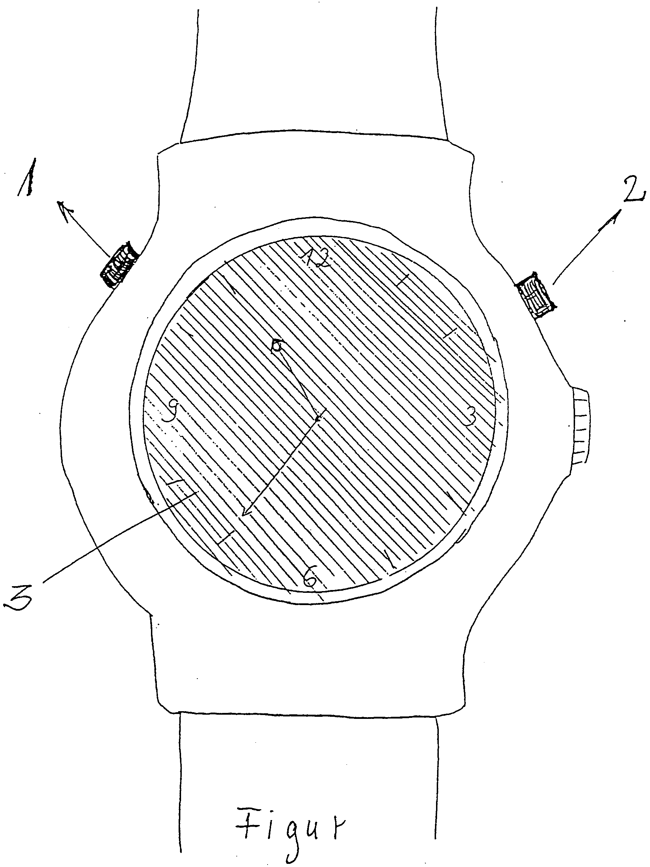

Ein bevorzugtes Ausführungsbeispiel wird anhand der beigefügten Figur erläutert, die eine Armbanduhr mit Kalorien- bzw. Blutalkoholkonzentrationskalkulator darstellt.

In der Figur ist eine Armbanduhr zu erkennen, die ein Ziffernblatt 3 aufweist und zwei Druckknöpfe 1 und 2. Über den Druckknopf 1 wird die Energiezufuhr bzw. Alkoholzufuhr zum Körper durch mehrmaliges Drücken eingegeben. Bei jedem Drücken werden bevorzugt 50 oder 100 Kilokalorien bzw. eine gängige Alkoholzufuhrmenge eingegeben. Über Knopf 2 werden bei sportlichen Aktivitäten Energieverbrauchswerte ebenfalls in Portionen von 50 oder 100 Kilokalorien eingegeben. Bei der Armbanduhr mit Blutalkoholkonzentrationskalkulator fehlt der Knopf 2. Es ist jedoch auch möglich, die Armbanduhr mit einem kombinierten Kalorien-Blutalkoholkonzentrationskalkulator zu versehen. Bei einer solchen Ausführungsform sind selbstverständlich zwei Knöpfe vorhanden. Das Ziffernblatt verfärbt sich je nach Energiegesamtwert bzw. Blutalkoholkonzentration von hellblau bei Energiewert 0 bzw. Blutalkoholkonzentration 0 über hellgelb bei einem Energiewert bzw. Blutalkoholkonzentrationswert, der zwischen 0 und dem Energiemaximalwert bzw. Blutalkoholkonzentrationsmaximalwert liegt, bis zu rot, wenn der Energiemaximalwert bzw. Blutalkoholkonzentrationsmaximalwert überschritten ist. Druckknopf 1 ist bevorzugt rot, während Druckknopf 2 bevorzugt grün ist. Selbstverständlich bleibt die Uhr als solche in ihrer Funktion als Zeitaussage erhalten, mit einem normalen Ziffernblatt und einem zur Zeitanzeigefunktion gehorenden Stellmechanismus (nicht dargestellt). Das Zifferblatt der Uhr, welches vom Beginn an hellblau ist, wechselt mit zunehmender Kalorienzahl bzw. Blutalkoholkonzentrationszahl (sprich Druckauslösungen auf dem roten Knopf) in einen warnend hellgelben Ton (und zwar am oberen Zifferrand beginnend), bis sich diese neue Farbe über das gesamte Zifferblatt geschoben hat, und zu einem warnend roten Farbton, welcher besagen soll: die zulässige und vorgegebene Kalorienzahl bzw. Blutalkoholkonzentration, die sich nach den prinzipiellen Werten der Ernährungstheorie berechnet und als approximativer Wert unterlegt ist, bzw. sich aus den gesetzlichen Bestimmungen ergibt, ist überschritten. Der gegenläufige Ablauf in der Farbskala ist über die Eingabe eines Kalorienverbrauchs, beispielsweise bei intensivem Sport, möglich. Über eine erweiterte Handhabung, die im Programm vorgesehen ist, kann der Kalorienzählwert bzw. der Blutalkoholkonzentrationszählwert auf 0 gestellt werden bzw. in der Vorgabe von Höchstkalorienzahlen bzw. Höchstblutalkoholkonzentrationen permanent verändert (programmiert) werden.

In die Uhr ist ein Mikroprozessor eingebaut, der den Energiegesamtwert bzw. Blutalkoholkonzentrationsgesamtwert berechnet und die Färbung des Ziffernblattes 3 entsprechend steuert. Über die Druckknöpfe kann das Körpergewicht des Uhrenträgers, die normale körperliche Aktivität und das Alter eingegeben werden und der Mikroprozessor berechnet den Grundenergieverbrauch bzw. den Alkoholabbau des Körpers als Funktion der Zeit und subtrahiert ihn von den Eingabewerten von Energiezufuhr bzw. Alkoholzufuhr und Energieverbrauch. Der zulässige Maximalenergiebetrag bzw. die zulässige Maximalblutalkoholkonzentration kann über die Druckknöpfe in den Mikroprozessor eingegeben werden. Dies kann zum Beispiel dadurch geschehen, daß ein Betätigen des Druckknopfes 1 nach einem zweimaligen Betätigen des Druckknopfes 2 kurz hintereinander einen Maximalenergiebetrag von 5 oder 10 Kilokalorien bzw. einer entsprechenden Alkoholzufuhr eingibt. Das Körpergewicht kann dadurch eingegeben werden, daß der Druckknopf 1 bei betätigtem Druckknopf 2 bei jedem Drücken eine Körpergewichtseingabe von 5 oder 10 Kilogramm bewirkt. An der Uhr kann eine zusätzliche Anzahl vorgesehen sein (nicht dargestellt), die die Energiewerte bzw. Alkoholkonzentrationen der gebräuchlichsten Nahrungsmittel bzw. Getränke im Verhältnis zu ihren Mengen anzeigt. Dabei ist im Mikroprozessor eine Datenbank vorgesehen, aus der diese Werte stammen. Die zusätzliche Anzeige kann auch Energiewerte aus vergangenen Zeiten aus der Datenbank anzeigen. Für diese Funktionen sind jeweils zusätzliche Druckknöpfe (nicht dargestellt) vorgesehen. Über die zusätzliche Anzeige kann bei Betätigung eines weiteren Druckknopfes auch eine Reihe von Basis- und Empfehlungsdaten im Ernährungsbereich sowie zum angeratenen Bewegungsbereich aus der Datenbank angezeigt werden. Die zusätzliche Anzeige kann eine Digitalanzeige sein. Das Stellen des Energiezählwertes bzw. der Blutalkoholkonzentration auf 0 kann beispielsweise durch dreimaliges Betätigen des Druckknopfes 1 kurz hintereinander bewirkt werden. Es ist auch möglich, durch die Farbenanzeige zusätzlich die Pulsfrequenz anzuzeigen, wobei bei einer charakteristischen Pulsfrequenz ein Farbwechsel erfolgt. Ebenfalls angezeigt werden können durch die Farbanzeige die Umgebungstemperatur, die Körpertemperatur, wobei bei einer Körpertemperatur von 37,0°C ein Farbwechsel erfolgt, die Dicke der Unterhautfettschicht der elektrische Hautwiderstand, und eine Kontrollskala für Diabetiker, gemessen in sogenannten Broteinheiten.

Die Farbanzeige kann auf der Basis eines verfärbbaren Flüssigkeitskristalls bzw. einer Druckkapsel erfolgen. Die Farbanzeige kann selbstleuchtend sein.

## Patentansprüche

1. Uhr, insbesondere Armbanduhr, mit Kalkulator, die außer der Zeitanzeige eine weitere Anzeige aufweist, dadurch gekennzeichnet, daß die weitere Anzeige, die vom Kalkulator berechneten Werte anzeigt, mittels einer Färbung eines Teils der Uhr erfolgt.

2. Uhr nach Anspruch 1, dadurch gekennzeichnet, daß es sich bei dem Kalkulator um einen Kalorienkalkulator handelt.

3. Uhr nach Anspruch 1, dadurch gekennzeichnet, daß es sich bei dem Kalkulator um einen Blutalkoholkonzentrationskalkulator handelt.

4. Uhr nach Anspruch 1, dadurch gekennzeichnet, daß es sich bei dem Kalkulator um einen kombinierten Kalorien-/Blutalkoholkonzentrationskalkulator handelt.

5. Uhr nach einem der Ansprüche 1 bis 4, dadurch gekennzeichnet, daß der Teil der Uhr, der verfärbt wird, auf dem Ziffernblatt (3) angeordnet ist.

6. Uhr nach einem der Ansprüche 1 bis 4, dadurch gekennzeichnet, daß der Teil der Uhr, der verfärbt wird, auf dem Armband angeordnet ist.

7. Uhr nach einem der Ansprüche 2 bis 6, dadurch gekennzeichnet, daß die Kalorienzufuhr bzw. die Alkoholzufuhr durch eine Betätigungseinrichtung (1) in die Uhr eingegeben wird.

8. Uhr nach Anspruch 7, dadurch gekennzeichnet, daß die Betätigungseinrichtung (1) als Druckknopf (1) ausgebildet ist.

9. Uhr nach Anspruch 7 oder 8, dadurch gekennzeichnet, daß der Kalorienverbrauch durch sportliche Aktivität durch eine weitere Eingabevorrichtung (2) eingegeben wird.

10. Uhr nach Anspruch 9, dadurch gekennzeichnet, daß die weitere Eingabevorrichtung (2) als weiterer Druckknopf (2) ausgebildet ist.

11. Uhr nach einem der Ansprüche 1 bis 10, dadurch gekennzeichnet, daß der Kalkulator auf Mikroprozessorbasis arbeitet, die Kalorienzufuhr bzw. Alkoholzufuhr in den Mikropozessor eingegeben werden, der Mikroprozessor den Kalorienverbrauch bzw. den Alkoholabbau des Körpers berechnet und die Farbanzeige entsprechend steuert.

12. Uhr nach Anspruch 11, dadurch gekennzeichnet, daß über eine der Betätigungseinrichtungen (1, 2) das Körpergewicht, die Körpergröße, die normale Aktivität und das Alter eingegeben werden kann, und der Mikroprozessor seine Berechnungen auf dieser Grundlage ausführt.

13. Uhr nach einem der Ansprüche 11 oder 12, dadurch gekennzeichnet, daß durch eine der Eingabevorrichtungen (1, 2) der Maximalkalorienwert bzw. die maximale Alkoholkonzentration in den Mikroprozessor eingegeben wird.

14. Uhr nach einem der Ansprüche 1 bis 13, dadurch gekennzeichnet, daß noch eine weitere zusätzliche Anzeige vorgesehen ist, in der Uhr eine Datenbank vorgesehen ist, noch weitere Betätigungseinrichtungen vorgesehen sind, und die noch weitere zusätzliche Anzeige bei Betätigung der noch weiteren Betätigungseinrichtungen die Kalorienwerte bzw. Alkoholkonzentrationen der gebräuchlichsten Nahrungsmittel bzw. Getränke aus der Datenbank anzeigt.

15. Uhr nach Anspruch 14, dadurch gekennzeichnet, daß die Uhr über die noch weitere Anzeige Basis- und Empfehlungsdaten im Ernährungsbereich sowie zum angeratenen Bewegungsbereich anzeigt.

16. Uhr nach einem der Ansprüche 1 bis 15, dadurch gekennzeichnet, daß individuell drei Farbtöne der Farbanzeige (3) ausgewählt werden können.

17. Uhr nach einem der Ansprüch 1 bis 16, dadurch gekennzeichnet, daß die Farbanzeige (3) auf einem verfärbbaren Flüssigkristall basiert.

18. Uhr nach einem der Ansprüche 1 bis 16, dadurch gekennzeichnet, daß die Farbanzeige (3) auf einer Druckkapsel beruht.

19. Uhr nach einem der Ansprüche 1 bis 18, dadurch gekennzeichnet, daß durch die Farbanzeige (3) zusätzlich die Pulsfrequenz angezeigt wird, wobei bei einer charakteristischen Pulsfrequenz ein Farbwechsel erfolgt.

20. Uhr nach einem der Ansprüche 1 bis 19, dadurch gekennzeichnet, daß durch die Farbanzeige (3) zusätzlich die Umgebungstemperatur angezeigt werden kann.

21. Uhr nach einem der Ansprüche 1 bis 20, dadurch gekennzeichnet, daß durch die Farbanzeige (3) zusätzlich die Körpertemperatur angezeigt werden kann, wobei bei einer Körpertemperatur von 37,0°C ein Farbwechsel erfolgt.

22. Uhr nach einem der Ansprüche 1 bis 21, dadurch gekennzeichnet, daß durch die Farbanzeige (3) zusätzlich die Dicke der Unterhautfettschicht angezeigt werden kann.

23. Uhr nach einem der Ansprüche 1 bis 22, dadurch gekennzeichnet, daß durch die Farbanzeige (3) zusätzlich der elektrische Hautwiderstand angezeigt werden kann.

24. Uhr nach einem der Ansprüche 1 bis 23, dadurch gekennzeichnet, daß durch die Farbanzeige (3) eine Kontrollskala für Diabetiker (gemessen in sogenannten Broteinheiten) angezeigt werden kann.

25. Uhr nach einem der Ansprüche 1 bis 24, dadurch gekennzeichnet, daß die Farbskala (3) selbstleuchtend ist.
